# EUROPEAN PATENT SPECIFICATION

(11) **EP 1 068 270 B1**
(45) Date of publication and mention of the grant of the patent: **19.02.2003**
(21) Application number: 99914983.4
(22) Date of filing: 25.03.1999
(51) Int. Cl.: C08L 83/05, C08L 83/04, C04B 41/49, C09D 183/04, C09D 183/05

(54) **STORAGE-STABLE WATER-REPELLENT COMPOSITION FOR MASONRY MATERIALS**
LAGERSTABILES WASSERABWEISENDES MITTEL FÜR BAUMATERIALIEN
COMPOSITION HYDROPHOBES STABLES AU STOCKAGE, POUR MATERIAUX DE MA ONNERIE

(30) Priority: 30.03.1998 US 50389
(43) Date of publication of application: 17.01.2001
(73) Proprietor: DOW CORNING CORPORATION, Auburn, MI 48611 (US)
(72) Inventor: Be, Anh, Midland, MI 48640 (US); LILES, Donald, Taylor, Midland, MI 48640 (US); WILHELMI, Francisco, Gerardo, Palencia, Midland, MI 48640 (US)
(74) Representative: Harrison, Michael Charles
(86) International application number: PCT/US99/06290
(87) International publication number: WO 99/050355

(56) References cited:
- US-A- 4 643 771
- US-A- 5 091 002
- US-A- 5 110 684
- US-E- R E33 759

## Description

The present invention relates generally to water-repellent compositions for use with masonry products that are storage stable. The claimed composition combines a relatively water-insoluble hydrolyzable silane and a hydrogen-functional polysiloxane in the form of an aqueous emulsion.

The beneficial effects of using water-repellent compositions to protect masonry materials are well-known. As used herein, "masonry" means any porous inorganic substrate, particularly building compositions which include structural ceramics, such as common brick, paving brick, face brick, sewer pipe, drain tile, hollow block, terra cotta, conduits, roofing tile, cements and plastics such as Portland cement, calcined gypsum products, molding and building plasters, stucco, magnesia cement, insulation products, such as electrical insulators and natural or artificial stone. Because of their porosity in the untreated condition, these materials readily absorb ambient moisture. Subsequent exposure to freezing temperatures cause fractures, resulting in cracking and spalling. In masonry materials used for constructing roads and bridges, water-repellent coatings also serve to protect the masonry materials from the deleterious effects of salt and like deicers.

US Reissue Patent 33,759 discloses a composition in the form of an aqueous emulsion for rendering masonry materials water-repellent. The claimed composition therein consists essentially of a hydrolyzable silane or an oligomer thereof, an emulsifier having a Hydrophobic Lipophilic Balance Number (HLB) of from 4 - 15 and water. When we prepared these compositions, we found they suffer from the drawback that they offer only limited shelf stability, which is exacerbated by exposure to heat.

US Patent 5,110,684 similarly describes a water-repellent composition for masonry that includes a mixture of a water-soluble silane coupling agent and an emulsion of a hydrogen-functional polysiloxane. This composition, however, also has the drawback that it possesses a very limited shelf life.

Thus, there exists a need for a water-repellent composition adapted for use with masonry products that is storage-stable.

Our invention is an efficient and effective composition adapted for imparting water-repellent properties to masonry materials. It is conveniently applied as a coating over the surface of a masonry substrate or it may be mixed as an additive with settable masonry materials, such as concrete or calcined gypsum, prior to setting.

This water-repellent composition claimed herein comprises an aqueous emulsion that has both a continuous aqueous phase and a discontinuous organosilicon phase. Our aqueous emulsion is formulated from the components comprising: (A) a water-insoluble alkoxysilane of the average formula Rₙ-Si-R'₍₄₋ₙ₎ wherein n is a number from 1 to 2, R is a C₅ - C₂₀ monovalent hydrocarbon radical and R' is a C₁ to C₄ alkoxy group; (B) a hydrogen-functional polysiloxane having at least two silicon-bonded hydrogen atoms per molecule, at least five siloxy units per molecule and a kinematic viscosity between 0.5 X 10⁻⁶ and 1,000 X 10⁻⁶ m²/sec at 25°C.; (C) an emulsifier; and (D) water. The discontinuous organosilicon phase herein comprises components (A) and (B) and the continuous aqueous phase comprises water. The ratio of Components (A) : (B) in the organosilicon phase is such that our emulsion exhibits both physical and chemical stability when stored at room temperature for six months or at 50°C. for six weeks. The organosilicon phase is present in said aqueous emulsion from 10 to 75 weight percent.

As used herein for our water-repellent emulsion compositions, the term "stable" encompasses two phenomena: 1) physical stability and 2) chemical stability.

Our claimed water-repellent emulsion compositions are of the oil-in-water type and physical instability will occur when the emulsion breaks. The suspended droplets which form the discontinuous organosilicon phase (also referred to as the oil phase or the disperse phase) agglomerate and are effectively removed from suspension in the continuous aqueous phase. Differences in density between these phases leads to the formation of two distinct liquid layers. Thus, a physically stable emulsion must retain a homogeneous appearance over time.

An emulsion may remain physically stable but not chemically stable. Chemical instability over time or upon exposure to heat is clearly evidenced when the ability of the composition to exclude moisture, whenever applied to a masonry surface, is severely compromised. It is believed that chemical instability results when the organosilicon phase of the emulsion undergoes considerable hydrolysis and condensation (or partial cure) before initial application to a masonry material.

Measuring both chemical and physical stability is conducted by simply observing the appearance and performance characteristics of a given water-repellent emulsion as a function of storage time at room temperature. Such aging tests, however, are easily accelerated by the application of heat. Those skilled in the art will appreciate that the storage of a water-repellent emulsion at 50°C. for one week is generally equivalent to storage at room temperature for one month. Accordingly, as used herein, "physically stable" means that the emulsion remains unbroken when stored at room temperature for at least six months or 50°C. for six weeks. Likewise, as used herein, "chemically stable" means that, after storage at room temperature for six months or at 50°C. for six weeks, the emulsion exhibits at least 60 percent water exclusion characteristics ("%WE") as determined by a modified National Cooperative Highway Research Program Protocol 244 (NCHRP 244). Our modified NCHRP 244 is identical in all respects to that of NCHRP244 except that water exclusion testing is performed on mortar cubes that are 2 inches (5.08 cm) on a side, as opposed to 4 inches (10.16 cm) on a side.

The composition of this invention forms an excellent water-repellent barrier in the form of a resinous coating when applied to a masonry material. Curing of said composition is then catalyzed by the residual alkalinity of the masonry material. Our invention has surprisingly good heat and shelf stability. It is believed that these stabilities are attributable to the incorporation of a water-insoluble alkoxysilane and a hydrogen-functional polysiloxane into our discontinuous organosilicon phase of the aqueous emulsion.

It is therefore an object of the present invention to provide a water-repellent composition in the form of an emulsion, adapted for use with masonry materials, that exhibits both physical and chemical stability.

It is another object of this invention to provide such a composition that excludes water from masonry materials at least as well as prior art compositions.

Beneficially, the present invention provides a physically and chemically stable composition that is adapted for imparting water-repellent properties to masonry materials. Said composition comprises: (A) a water-insoluble alkoxysilane; (B) a hydrogen-functional polysiloxane; (C) an emulsifier; and (D) water. This composition is in the form of an aqueous emulsion which includes a continuous aqueous phase and a discontinuous organosilicon phase. When the composition contacts a masonry material, the water-insoluble alkoxysilane and the hydrogen-functional polysiloxane hydrolyze and condense with one another and with the hydroxide groups in the masonry; thus forming a resinous, water-repellent network. The hydrolysis and condensation reactions are catalyzed by the latent alkalinity of the masonry material.

Component (A) is a water-insoluble alkoxysilane of the average formula: Rₙ-Si-R'₍₄₋ₙ₎ wherein n is a number from 1 to 2, R is a C₅ - C₂₀ monovalent hydrocarbon radical and R' is a C₁ - C₄ alkoxy group.

With reference to Component (A), the term "water-insoluble" means that less than one gram of the silane can be dissolved in 100 grams of water. This is an important distinction between the claimed invention and the compositions of the prior art. It is believed that the use of a water-soluble silane coupling agent contributes to the limited shelf life of the composition of US Patent 5,110,684. Water-soluble silane coupling agents undergo rapid hydrolysis and condensation when exposed to water. Our use of a water-insoluble alkoxysilane unexpectedly allows incorporation of the silane into the discontinuous organosilicon phase in our aqueous emulsion. This avoids hydrolysis and condensation of the alkoxysilane until such time as the silane is in direct contact with a masonry material.

In the formula for Component (A), R is a C₅ - C₂₀ monovalent hydrocarbon radical. In hydrolyzable silanes where lower carbon contents are employed, the silanes tend to be water-soluble. However, even hydrocarbon radicals in the C₅ - C₂₀ range can render our alkoxysilane water-soluble if certain groups, such as amino groups, are incorporated therein. Accordingly, R may be unsubstituted or substituted with various groups, but only insofar as such groups do not cause the alkoxysilane to become water-soluble.

Because it imparts our cured composition with hydrophobicity, the R group in the above formula also plays an important role in the ability of said composition to exclude moisture. As a general rule, the higher the carbon content of the R group, the greater the hydrophobicity imparted to the final cured coating. Nonetheless, alkoxysilanes having a C₂₀ R group will generally approach the upper limit of what is commercially available. Surprisingly, we have found it preferable that R is an n-octyl radical because a very stable emulsion results which imparts good hydrophobicity. It is noted, however, that R may be a straight or branched alkyl group, an aryl group or an arylalkyl group.

R' is limited to a C₁ - C₄ alkoxy group because higher carbon contents in the alkoxy groups tend to be less reactive. The value of n is a number between 1 and 2 and most preferably is 1. Trialkoxysilanes are preferred because they form a three dimensional resinous network. Nonetheless, it is recognized that dialkoxysilanes can also be successfully employed, as well as a mixture thereof with trialkoxysilane. Those skilled in the art will also appreciate that oligomeric hydrolyzates of the aforementioned alkoxysilanes are also useful.

The most preferred compound for use as Component (A) is n-octyltriethoxysilane. Component (B) of this invention is a hydrogen-functional polysiloxane having at least two silicon-bonded hydrogen atoms per molecule, at least five siloxy units per molecule and a kinematic viscosity between 0.5 x 10⁻⁶ and 1,000 X 10⁻⁶ m²/sec at 25°C. and preferably between 10 x 10⁻⁶ and 100 X 10⁻⁶ m²/sec at 25°C. Component (B) may be a linear, branched or cyclic siloxane or any combination thereof and, in addition to silicon-bonded hydrogen, it may include alkyl, aryl and arylalkyl groups. Thus, suitable compounds (having the requisite degree of polymerization to remain within our designated viscosity range) include alkylmethyl/methyl-hydrogen siloxane copolymers and methyl-hydrogen siloxanes.

If the kinematic viscosity of Component (B) is less than 0.5 X 10⁻⁶ m²/sec at 25°C., it is too volatile to function effectively in our claimed composition. In other words, the hydrogen-functional siloxane tends to evaporate before it is hydrolyzed and condensed into a resin matrix when the composition is applied to a masonry surface. If the viscosity of Component (B) is greater than 1,000 X 10⁻⁶ m²/sec at 25°C., then our coating composition cannot effectively infiltrate the porous surface of the masonry material. Most preferred for effective pore penetrations is a trimethylsiloxy end-capped dimethyl/methylhydrogen linear siloxane copolymer having three methylhydrogensiloxy and five dimethylsiloxy groups. A lower cost alternative for Component (B) is a trimethylsiloxy end-capped methyl-hydrogen linear siloxane having sixty methylhydrogensiloxy groups.

Component (C) of our invention is an emulsifier. Ionic, nonionic and amphoteric emulsifiers are used in the composition of the present invention with the nonionic polyoxyethylene lauryl ethers preferred. In general, the amount of emulsifier may range from less than one percent to 20 percent of the combined weight of components (A), (B) and (D). The amount utilized will, of course, depend upon the efficacy of the particular surfactant. Typically, the amount of emulsifier (C) is between one and three weight percent of the remaining components. Emulsifiers having an HLB number in the range of 2 to 20 are effectively employed. Preferably, the emulsifier has a HLB number in the range of 4 to 17, which tends to produce a more stable emulsion. It will be appreciated by those skilled in the art that blends of various emulsifiers may also be used.

Component (D) is water and is preferably a deionized or distilled water.

When combining components (A) - (D), it is preferred that the silicone components (A) and (B) be preblended, after which components (C) and (D), the emulsifier and water, are added and blended in any order. Indeed, when component (B), the hydrogen-functional polysiloxane, is of a relatively low molecular weight (e.g. a trimethylsiloxy end-capped dimethyl/methylhydrogen linear siloxane copolymer having three methylhydrogensiloxy and five dimethylsiloxy groups) it must first be blended with component (A), the water-insoluble alkoxysilane, before combining with (C) the emulsifier and (D) water. Otherwise, the emulsion composition of our invention will not be produced. Preferably, Component (C) is separately mixed with Component (D). Thereafter, the two mixtures (A & B and C & D) are combined in a single container and mixed for 30 minutes. Finally, the resultant mixture is passed in one pass through a homogenizer (at 7,500 psi or 5.17 X 10⁷ Pa) or in two passes in a sonaltor (at 1,400 psi or 9.65 X 10⁶ Pa) to produce the emulsion of this invention.

When Component (B) is a relatively high molecular weight hydrogen-functional polysiloxane (e.g. a trimethylsiloxy end-capped methylhydrogen linear siloxane, having sixty methylhydrogensiloxy groups and a viscosity of 30 x 10⁻⁶ m²/sec), all components (A) - (D) may be added to a container and mixed. Emulsification can be augmented by shaking and using a homogenizer or by subjecting the mixture to ultrasonic energy.

The discontinuous organosilicon phase comprises between 10 and 75 weight percent of the aqueous emulsion but preferably comprises 40 to 60 weight percent of said emulsion.

The ratio of Component (A) to Component (B) is such that the emulsion exhibits both physical stability and chemical stability when stored at room temperature for six months or at 50°C. for six weeks.

When the molecular weight of Component (B) is relatively low (e.g. a trimethylsiloxy end-capped dimethyl/methylhydrogen linear siloxane copolymer having three methylhydrogensiloxy and five dimethylsiloxy groups), the weight ratio of Component (A) to Component (B) is preferably from 10:90 to 90:10. When the molecular weight of Component (B) is relatively high (e.g. a trimethylsiloxy end-capped methylhydrogen linear siloxane having sixty methylhydrogensiloxy groups), the preferred weight ratio of Component (A) to Component (B) is 1:3.

It is believed, however, that weight ratios of Component (A) to Component (B) greater than 90:10 will result in emulsions that exhibit both chemical and physical stability, particularly when the pH of the emulsion is maintained at 4 to 5. A pH in this range inhibits the hydrolysis and condensation of Components (A) and (B) in the organosilicon phase. This is readily accomplished by the addition of a relatively weak acid, such as glacial acetic acid, to our emulsion.

Various features and advantages of the invention are illustrated by the examples below. With respect to Examples 1 - 5 and Comparative Examples 1 - 3, the percent water exclusion ("%WE") attributable to the emulsion was determined by our modified National Cooperative Highway Research Program 244 Protocol (NCHRP 244), using 5.08 X 5.08 X 5.08 cm cubes cast from Type III mortar, prepared in accordance with ASTM C 109. The depth of penetration was measured by cracking a treated block and subjecting the fracture surface to a 1 % solution of sulfanazo 111 dye. The depth of penetration corresponded to the unstained depth measured at the fracture surface.

### Example 1

Herein, 0.8 g of polyoxyethylene (4) lauryl ether (HLB = 9.7, Brij® 30 from ICI Americas, Inc., Wilmington, Delaware), 1.1 g of 72% aqueous solution of polyoxyethylene (23) lauryl ether (HLB = 16.9, Brij® 35, also from ICI Americas, Inc.) and 58.3 g of deionized water were mixed for 15 minutes. 36 g of trimethylsiloxy end-capped dimethyl/methylhydrogen linear siloxane copolymer having three methylhydrogensiloxy and five dimethylsiloxy groups with a kinematic viscosity of 10 X 10⁻⁶ m²/sec and 4 g of n-octyltriethoxysilane were mixed for five minutes and combined. Mixing was continued for an additional 30 minutes and the resultant mixture was then subjected to one pass through a homogenizer at 7,500 psi or 5.17 X 10⁷ Pa. This resulted in an oil-in-water emulsion having a mean particle size of 400 nm.

The %WE (percent water exclusion) imparted by the fresh emulsion was 84. The fresh emulsion penetrated the block to a depth of 3.5 mm. We then subjected this emulsion to aging by storage at 50°C. for six weeks. The aged emulsion remained unbroken and the %WE imparted thereby was 80.7.

### Example 2

Next, 0.8 g of polyoxyethylene (4) lauryl ether (HLB = 9.7, Brij® 30), 1.1 g of 72% aqueous solution of polyoxyethylene (23) lauryl ether (HLB = 16.9, Brij® 35) and 58.3 g of deionized water were mixed for 15 minutes. 20 g of trimethylsiloxy end-capped dimethyl/methylhydrogen linear siloxane copolymer having three methylhydrogensiloxy and five dimethylsiloxy groups with a kinematic viscosity of 10 X 10⁻⁶ m²/sec and 20 g of n-octyltriethoxysilane were mixed for five minutes and combined. Mixing was continued for an additional 30 minutes and the resultant mixture was then subjected to one pass through a homogenizer at 7,500 psi or 5.17 X 10⁷ Pa. This produced an oil-in-water emulsion having a mean particle size of 400 nm.

The %WE imparted by the fresh emulsion was 80.5 and said emulsion penetrated the block to a depth of 6 mm. The fresh emulsion was thereafter subjected to aging by storage at 50°C. for six weeks. The aged emulsion remained unbroken and the %WE imparted thereby was 80.8.

### Example 3

An emulsion composition was prepared in a manner identical to that for Example 1 except that the amount of polyoxyethylene (4) lauryl ether was reduced to 0.6 g (from 0.8 g).

The %WE imparted by the fresh emulsion was 83.4 and said emulsion penetrated the block to a depth of 4.5 mm. The fresh emulsion was thereafter subjected to aging by storage at 50°C. for six weeks. The aged emulsion remained unbroken and the %WE imparted was 83.6. The aged emulsion penetrated the block to a depth of 5 mm.

### Example 4

1.45 g of 72% aqueous solution of polyoxyethylene (23) lauryl ether (HLB = 16.9, Brij® 35) and 58.3 g of deionized water were mixed for 15 minutes. 20 g of trimethylsiloxy end-capped dimethyl/methylhydrogen linear siloxane copolymer having three methylhydrogensiloxy and five dimethylsiloxy groups with a kinematic viscosity of 10 X 10⁻⁶ m²/sec and 20 g of n-octyltriethoxysilane were mixed for five minutes and combined. Mixing was continued for an additional 30 minutes and the resultant mixture was then subjected to one pass through a homogenizer at 7,500 psi or 5.17 X 10⁷ Pa. This resulted in an oil-in-water emulsion having a mean particle size of 400 nm.

The %WE imparted by the fresh emulsion was 89 and said emulsion penetrated the block to a depth of 3.5 mm. The fresh emulsion was thereafter subjected to aging by storage at 50°C. for six weeks. The aged emulsion remained unbroken and the %WE imparted thereby was 77.5.

### Example 5

Next, 0.8 g of polyoxyethylene (4) lauryl ether (HLB = 9.7, Brij® 30), 1.1 g of 72% aqueous solution of polyoxyethylene (23) lauryl ether (HLB = 16.9, Brij® 35) and 58.3 g of deionized water were mixed for 15 minutes. 4 g of trimethylsiloxy end-capped dimethyl/methylhydrogen linear siloxane copolymer, having three methylhydrogensiloxy and five dimethylsiloxy groups with a kinematic viscosity of 10 X 10⁻⁶ m²/sec and 36 g of n-octyltriethoxysilane were mixed for five minutes and combined. Mixing was continued for an additional 30 minutes and the resultant mixture was then subjected to one pass through a homogenizer at 7,500 psi or 5.17 X 10⁷ Pa. This resulted in an oil-in-water emulsion having a mean particle size of 400 nm.

The %WE imparted by the fresh emulsion was 84.5 and said emulsion penetrated the block to a depth of 6.3 mm. The fresh emulsion was thereafter subjected to aging by storage at 50°C. for six weeks. The aged emulsion remained unbroken and the %WE imparted thereby was 82.8.

### Comparative Example 1

Thereafter, 0.8 g of polyoxyethylene (4) lauryl ether (HLB = 9.7, Brij® 30), 1.1 g of 72% aqueous solution of polyoxyethylene (23) lauryl ether (HLB = 16.9, Brij® 35) and 58.3 g of deionized water were mixed for 15 minutes. 40 g of n-octyltriethoxy silane was added thereto and mixing was continued for an additional 30 minutes. The resultant mixture was then subjected to one pass through a homogenizer at 7,500 psi or 5.17 X 10⁷ Pa.

The %WE imparted by the fresh emulsion was 78.2 and said emulsion penetrated the block to a depth of 5 mm. The fresh emulsion was thereafter subjected to aging by storage at 50°C. for six weeks. The aged emulsion remained unbroken but the %WE imparted thereby was only 28.5. Thus, the lack of any hydrogen-functional polysiloxane in this formulation rendered a chemically unstable composition.

### Comparative Example 2

Subsequently, 0.8 g of polyoxyethylene (4) lauryl ether (HLB = 9.7, Brij® 30), 1.1 g of 72% aqueous solution of polyoxyethylene (23) lauryl ether (HLB = 16.9, Brij® 35) and 58.3 g of deionized water were mixed for 15 minutes. 40 g of propyltrimethoxysilane were then added and mixing was continued for an additional thirty minutes. The resultant mixture was next subjected to one pass through a homogenizer at 7,500 psi or 5.17 X 10⁷ Pa. This resulted in an aqueous emulsion having a mean particle size of 400 nm.

The %WE imparted by the fresh emulsion was 50 and said emulsion penetrated the block to a depth of 1 mm. The fresh emulsion was not thereafter subjected to aging. Thus, the absence of hydrogen-functional polysiloxane in the formulation and the use of propyltrimethoxysilane (an alkoxysilane that is not a water-insoluble alkoxysilane as defined herein for Component (A) does not yield a composition having acceptable water-repellency.

### Comparative Example 3

Further, 0.6 g of polyoxyethylene (4) lauryl ether (HLB = 9.7, Brij® 30), 1.1 g of 72% aqueous solution of polyoxyethylene (23) lauryl ether (HLB = 16.9, Brij® 35) and 58.3 g of deionized water were mixed for 15 minutes. Thereafter, 20 g of n-octyltriethoxysilane was added and mixing was continued for thirty minutes. Next, 20 g of trimethylsiloxy end-capped dimethyl/methylhydrogen linear siloxane copolymer, having three methylhydrogensiloxy and five dimethylsiloxy groups with a kinematic viscosity of 10 X 10⁻⁶ m²/sec was added and mixing continued for another thirty minutes. Finally, the resultant mixture was subjected to one pass through a homogenizer at 7,500 psi or 5.17 X 10⁷ Pa. This resulted in an aqueous emulsion having a mean particle size of 400 nm.

The %WE imparted by the fresh emulsion was 80.8 and said emulsion penetrated the block to a depth of 5.5 mm. The fresh emulsion was thereafter subjected to aging by storage at 50°C. for six weeks. The aged emulsion remained unbroken and the %WE imparted thereby was, 30.2. The depth of penetration of the aged emulsion was 1 mm. These results should be compared with those of Example 2. It is then seen that when a lower molecular weight hydrogen-functional polysiloxane is used as our component (B), it is necessary to blend components (A) and (B) before addition of (C) and (D). A failure to mix these components in the requisite order can potentially produce a composition that lacks chemical stability.

### Example 6

157.5 g of a trimethylsiloxy end-capped methyl-hydrogen linear siloxane having sixty methyl-hydrogensiloxy groups and a kinematic viscosity of 30 X 10⁻⁶ m²/sec, 52.5 g of n-octyltriethoxysilane, 4.2 g of polyoxyethylene (4) lauryl ether (HLB = 9.7, Brij® 30), 19.5 g of a 28 percent aqueous solution of polyoxyethylene (23) lauryl ether (HLB = 16.9, Brij® 35) and 116.3 g of deionized water were combined in a container. The container contents were shaken for several minutes and then separated into 40 g batches in individual jars. The tip of an ultrasonic probe was next positioned 3/8 inch (1 cm) below the liquid surface in the center of each jar. The probe was energized to a setting of between 40-55% (the ultrasonic processor was rated at 475 watts maximum power) and the mixture was processed under these conditions for 30 seconds. An emulsion formed within several seconds of probe energization as noted by a milky white appearance which formed and remained. The probe was removed from each jar, a cap was installed and the mixture was shaken for 10-15 seconds before placement in a stream of cold running water for 1 minute to cool the jar and its contents. The probe was reinserted as before and energized for another 30 second period. The cap was installed and the jar was shaken again followed by cooling as before. The process was repeated several more times so the contents of each jar were processed with the ultrasonic probe for a total of 2.5 minutes. The contents of the jars were then combined and mixed to form a single composition. This composition consisted of a 60 percent by weight aqueous, oil-in-water emulsion, of which the oil phase consisted of 75 percent by weight of polymethylhydrogensiloxane and 25 percent by weight of n-octyltriethoxysilane. The weight ratio of n-octyltriethoxysilane (A) to hydrogen-functional polysiloxane (B) was 25:75. The mean particle size of the discontinuous organosilicon phase was 435 nm.

250 g of the resultant emulsion was diluted in 5 kg of water and placed in a trough. This provided a bath having an organosilicon content of three weight percent. A preweighed composite board (which included cured cement and cellulose fiber, having the dimensions 320 X 120 X 8 mm and manufactured by Duralita Corporation of Guatemala) was submerged in this bath for 12 seconds. The board was removed from the bath and allowed to stand for two minutes to permit the surface water to dissipate and was reweighed. The difference in weight before and after submersion was used to calculate the amount of diluted organosilicon emulsion that was absorbed by the board, which was 5.9 percent of the dry weight of said board.

The board was then permitted to dry for seven days and again weighed. The dried board was thereafter submereged to a depth of 20 inches (50.8 cm) in a water bath for two hours, removed, patted dry and reweighed to determine the weight percent of water absorbed, which was 1.9 percent.

The test was repeated with a second board and the amount of organosilicon emulsion that was absorbed was 5.7 weight percent. The amount of water absorbed after the first treatment was found to be 1.8 weight percent.

Finally, the emulsion was stored at room temperature and periodically observed for a period of one year. It was found to have physical stability (i.e. remained unbroken) over that time.

### Example 7

An emulsion similar to that of Example 6 was prepared by first mixing 33.4g of polyoxyethylene (23) lauryl ether solution (BRIJ®35, 72% active in water) in 547.0 g of hot (60°C.) tap water in a 2 quart (1.9 l) jar for 30 minutes to form a solution. Next 225 g of n-octyltriethoxysilane, 675 g of trimethylsiloxy end-capped dimethyl/methylhydrogen linear siloxane copolymer, having three methylhydrogensiloxy and five dimethylsiloxy groups with a kinematic viscosity of 10 X 10⁻⁶ m²/sec, 18 g of polyoxyethylene (4) lauryl ether (BRIJ®30) and 1.6 g of glacial acetic acid were added. The contents of the jar were stirred for one hour to form a dispersion. The dispersion was subsequently processed ultrasonically by pumping the liquid into a stainless steel cylinder which was equipped with an inlet and outlet port and which was fitted with an ultrasonic horn. The liquid which exited from the ultrasonic processor had the appearance of a white milky liquid and was collected in another jar. When the entire charge had been processed, it was passed again through the ultrasonic device for a second time. The composition consisted of a 60% active aqueous emulsion, the discontinuous organosilicon phase (active phase) consisted of 75% by weight of trimethylsiloxy end-capped methyl-hydrogen linear siloxane and 25% of n-octyltriethoxysilane. The organosilicon phase of the emulsion had a mean particle size (light scattering using a NIACOMP®370 Submicron Particle Sizer) of 563nm with 99% of the particles being less than 1420nm. The emulsion also contained 0.18 % acetic acid based on the active ingredients.

Two cement boards were treated and tested using the same procedure as described in Example 6. The weight percent of organosilicon emulsion absorbed by the boards was 6.3 and 6.4 weight percent, respectively. The amount of water pick-up was 2.4 and 2.5 weight percent.

Finally, the emulsion was stored at room temperature and periodically observed for one year. The emulsion remained unbroken during that time. Accordingly, premixing of our organosilicon Components (A) and (B) does not appear to be necessary when higher molecular weight hydrogen-functional polysiloxanes are used as our Component (B).

### Comparative Example 4

An emulsion similar to Example 6 was prepared in a like manner except that it contained only n-octyltriethoxysilane and no hydrogen-functional polysiloxane. 13.4 g of polyoxyethylene (23) lauryl ether solution (BRIJ®35L, 72% active in water) was then blended with 218.0 g of hot (60°C.) tap water and combined in a 2 quart (1.9 l) jar for 30 minutes to form a solution. Next, 360 g of n-octyltriethoxysilane, 7.2 g of polyoxyethylene (4) lauryl ether (BRIJ®30) and 0.7 g of glacial acetic acid were added. The contents of the jar were stirred for one hour to form a dispersion. The dispersion was processed ultrasonically by pumping the liquid into a stainless steel cylinder that was equipped with an inlet and outlet port and which had been fitted with an ultrasonic horn. The liquid which exited from the ultrasonic processor had the appearance of a white milky liquid and was collected in another jar. When the entire charge had been processed, it was again passed through the ultrasonic device for a second time. The composition consisted of a 60% active aqueous emulsion. The discontinuous organosilicon phase (active phase) consisted entirely of n-octyltriethoxysilane. The emulsion had a mean particle size (NIACOMP®370 Submicron Particle Sizer) of 514 nm with 99% of the particles <1447nm. The emulsion also contained 0.2 % acetic acid based on active ingredients.

Two cement boards were treated and tested using the procedure described in Example 6. The weight percent of organosilicon emulsion absorbed by the boards was 6.1 and 6.2, respectively. The amount of water pick-up was 2.9 and 4.8 weight percent.

Finally, the emulsion was stored at room temperature and periodically observed. The emulsion was broken after only one week. Thus, a failure to include a hydrogen-functional polysiloxane in the formulation results in an emulsion that is physically unstable.

From the foregoing Examples 1 - 7, it is clearly seen that aqueous emulsions made in accordance with the present invention exhibit excellent water-repellent properties, even if diluted. Furthermore, when the %WE of the heat-aged emulsions of Examples 1 - 5 are compared to the results of comparative Examples 1 - 4 and the aging results of Examples 6 and 7 are compared to the results of comparative Example 5, the extraordinary physical and chemical stability exhibited by our emulsions are clearly demonstrated.

Those skilled in the art will appreciate that the novel compositions of the invention can be used to impart the surfaces of masonry substrates with a cured water-repellent coating by coating their surfaces therewith and then permitting our composition to cure. In an analogous manner, the composition of the invention can be blended with settable masonry compositions, such as mortar or gypsum, to also impart the set composition with water-repellent properties.

## Claims

1. A storage-stable composition comprising an aqueous emulsion which comprises a continuous aqueous phase and a discontinuous organosilicon phase; said emulsion being formulated from components comprising:
(A) a water-insoluble alkoxysilane of the average formula Rₙ-Si-R'₍₄₋ₙ₎ wherein n is a number from 1 to 2, R is a C₅ - C₂₀ monovalent hydrocarbon radical and R' is a C₁ - C₄ alkoxy group;
(B) a hydrogen-functional polysiloxane having at least two silicon-bonded hydrogen atoms per molecule, at least five siloxy units per molecule and a kinematic viscosity between 0.5 X 10⁻⁶ and 1,000 X 10⁻⁶ m²/sec at 25°C.;
(C) an emulsifier; and
(D) water,
said discontinuous organosilicon phase comprising components (A) and (B) and said continuous aqueous phase comprising water;
said components (A) and (B) are present in said organosilicon phase in a weight ratio of from 10:90 to 90:10; said emulsion remains unbroken and exhibits at least 60 percent water exclusion characteristics, as determined by a modified National Cooperative Highway Research Program Protocol 244 performed on mortar cubes that are 2 inches (5.08 cm) on a side, after storage for six months at room temperature, or for six weeks at 50°C.; and
said organosilicon phase is present in said aqueous emulsion in an amount from 10 to 75 weight percent.

2. A composition in accordance with claim 1 wherein said Component (B) is a trimethylsiloxy end-capped dimethyl/methylhydrogen linear siloxane copolymer, having three methylhydrogensiloxy and five dimethylsiloxy groups with a kinematic viscosity of 10 X 10⁻⁶ m²/sec.

3. A composition in accordance with claim 1 wherein said Component (B) is a trimethylsiloxy end-capped methylhydrogen linear siloxane, having sixty methylhydrogensiloxy groups and a kinematic viscosity of 30 X 10⁻⁶ m²/sec.

4. A composition in accordance with claim 3 wherein the weight ratio of Components (A):(B) is 1:3.

5. A composition in accordance with claim 1 wherein said emulsifier Component (C) has an HLB number of 2 - 20.

6. A composition in accordance with claim 1 wherein said emulsifier is a polyoxyethylene lauryl ether.

7. A composition in accordance with claim 1 further comprising an acid in an amount sufficient to impart the composition with a pH of 4 - 5.

8. A method of making a storage-stable composition comprising an aqueous emulsion, which comprises a continuous aqueous phase and a discontinuous organosilicon phase, comprising the steps of:
(I) blending components comprising:
(A) a Water-insoluble alkoxysilane of the average formula Rₙ-Si-R'₍₄₋ₙ₎ wherein n is a number from 1 to 2, R is a C₅ - C₂₀ monovalent hydrocarbon radical and R' is a C₁ - C₄ alkoxy group; and
(B) a hydrogen-functional polysiloxane having at least two silicon-bonded hydrogen atoms per molecule, at least five siloxy units per molecule and a kinematic viscosity between 0.5 X 10⁻⁶ and 1,000 X 10⁻⁶ m²/sec at 25°C.; and
(II) combining the blend obtained in step (I) with:
(C) an emulsifier; and
(D) water; and then
(III) emulsifying the combination obtained in step (II) to form said emulsion wherein said discontinuous organosilicon phase comprises components (A) and (B) and said continuous aqueous phase comprises component (D) water;
said components (A) and (B) are present in said organosilicon phase in a weight ratio of from 10:90 to 90:10;
said emulsion remains unbroken and exhibits at least 60 percent water exclusion characteristics, as determined by a modified National Cooperative Highway Research Program Protocol 244 performed on mortar cubes that are 2 inches (5.08 cm) on a side, after storage for six months at room temperature, or for six weeks at 50°C.; and
said organosilicon phase is present in said aqueous emulsion in an amount from 10 to 75 weight percent.

9. An article of manufacture comprising a masonry substrate, said substrate presenting at least one surface which is coated with the storage-stable composition of any of the preceding claims 1 - 8.

10. A method of imparting a masonry substrate with a cured water-repellent coating, said substrate presenting at least one surface, said method comprising coating said surface with the aqueous emulsion of either of claims 1 or 8.

11. A method of imparting a settable masonry composition with water-repellent properties, said method comprising blending said settable masonry composition with the aqueous emulsion of either of claims 1 or 8.

## Patentansprüche

1. Lagerstabile Zusammensetzung, umfassend eine wäßrige Emulsion, die eine kontinuierliche wäßrige Phase und eine diskontinuierliche Organosiliciumphase umfaßt, wobei die Emulsion aus Komponenten formuliert ist, welche umfassen:
(A) ein wasserunlösliches Alkoxysilan der Durchschnittsformel Rₙ-Si-R'₍₄₋ₙ₎, wobei n eine Zahl von 1 bis 2 ist, R ein einwertiger C₅-C₂₀-Kohlenwasserstoffrest ist und R' eine C₁-C₄-Alkoxygruppe ist.
(B) ein Wasserstoff-funktionelles Polysiloxan mit mindestens zwei Siliciumgebundenen Wasserstoffatomen pro Molekül, mindestens fünf Siloxy-Einheiten pro Molekül und einer kinematischen Viskosität zwischen 0,5 x 10⁻⁶ und 1000 x 10⁻⁶ m²/s bei 25 °C,
(C) einen Emulgator und
(D) Wasser,
wobei die diskontinuierliche Organosiliciumphase die Komponenten (A) und (B) umfaßt und die kontinuierliche wäßrige Phase Wasser umfaßt;
wobei die Komponenten (A) und (B) in der Organosiliciumphase in einem Gewichtsverhältnis von 10:90 bis 90:10 vorliegen, die Emulsion nach Lagerung für sechs Monate bei Raumtemperatur oder für sechs Wochen bei 50°C erhalten bleibt und eine Wasserausschlußcharakteristik von mindestens 60% aufweist, wie mit einem modifizierten National Cooperative Highway Research Program Protocol 244 bestimmt, das mit Mörtelwürfeln von 5,08 cm (2 Zoll) Seitenlänge durchgeführt wurde, und die Organosiliciumphase in der wäßrigen Emulsion in einer Menge von 10 bis 75 Gewichtsprozent vorliegt.

2. Zusammensetzung nach Anspruch 1, worin die Komponente (B) ein mit einer Trimethylsiloxy-Endgruppe versehenes lineares Dimethyl/Methylwasserstoff-Siloxan-Copolymer, welches drei Methylwasserstoffsiloxy- und fünf Dimethylsiloxygruppen aufweist, mit einer kinematischen Viskosität von 10 x 10⁻⁶ m²/s ist.

3. Zusammensetzung nach Anspruch 1, worin die Komponente (B) ein mit einer Trimethylsiloxy-Endgruppe versehenes lineares Methylwasserstoff-Siloxan ist, welches sechzig Methylwasserstoffsiloxygruppen und eine kinematische Viskosität von 30 x 10⁻⁶ m²/s aufweist.

4. Zusammensetzung nach Anspruch 3, worin das Gewichtsverhältnis der Komponenten (A) : (B) 1:3 beträgt.

5. Zusammensetzung nach Anspruch 1, worin die Emulgator-Komponente (C) einen HLB-Wert von 2-20 aufweist.

6. Zusammensetzung nach Anspruch 1, worin der Emulgator ein Polyoxyethylenlaurylether ist.

7. Zusammensetzung nach Anspruch 1, welche ferner eine Säure in einer ausreichenden Menge umfaßt, um der Zusammensetzung einen pH-Wert von 4-5 zu verleihen.

8. Verfahren zur Herstellung einer lagerstabilen Zusammensetzung, umfassend eine wäßrige Emulsion, welche eine kontinuierliche wäßrige Phase und eine diskontinuierliche Organosiliciumphase umfaßt, umfassend die Schritte:
(I) Mischen von Komponenten, umfassend:
(A) ein wasserunlösliches Alkoxysilan der Durchschnittsformel Rₙ-Si-R'₍₄₋ₙ₎, wobei n eine Zahl von 1 bis 2 ist, R ein einwertiger C₅-C₂₀-Kohlenwasserstoffrest ist und R' eine C₁-C₄-Alkoxygruppe ist, und
(B) ein Wasserstoff-funktionelles Polysiloxan mit mindestens zwei Siliciumgebundenen Wasserstoffatomen pro Molekül, mindestens fünf Siloxy-Einheiten pro Molekül und einer kinematischen Viskosität zwischen 0,5 x 10⁻⁶ und 1000 x 10⁻⁶ m²/s bei 25 °C, und
(II) Kombinieren der in Schritt (I) erhaltenen Mischung mit
(C) einem Emulgator und
(D) Wasser, und dann
(III) Emulgieren der in Schritt (II) erhaltenen Kombination, um die Emulsion zu bilden,
wobei die diskontinuierliche Organosiliciumphase die Komponenten (A) und (B) umfaßt und die kontinuierliche wäßrige Phase die Komponente (D) Wasser umfaßt;
wobei die Komponenten (A) und (B) in der Organosiliciumphase in einem Gewichtsverhältnis von 10:90 bis 90:10 vorliegen, die Emulsion nach Lagerung für sechs Monate bei Raumtemperatur oder für sechs Wochen bei 50°C erhalten bleibt und eine Wasserausschlußcharakteristik von mindestens 60% aufweist, wie mit einem modifizierten National Cooperative Highway Research Program Protocol 244 bestimmt, das mit Mörtelwürfeln von 5,08 cm (2 Zoll) Seitenlänge durchgeführt wurde, und die Organosiliciumphase in der wäßrigen Emulsion in einer Menge von 10 bis 75 Gewichtsprozent vorliegt.

9. Hergestellter Gegenstand, umfassend ein Mauer-Substrat, wobei das Substrat mindestens eine Oberfläche zeigt, die mit der lagerstabilen Zusammensetzung nach irgendeinem der vorhergehenden Ansprüche 1-8 beschichtet ist.

10. Verfahren, um ein Mauer-Substrat mit einer getrockneten wasserabstoßenden Beschichtung zu versehen, wobei das Substrat mindestens eine Oberfläche zeigt und das Verfahren die Beschichtung dieser Oberfläche mit der wäßrigen Emulsion nach einem der Ansprüche 1 oder 8 umfaßt.

11. Verfahren, um einer abbindfähigen Mauer-Zusammensetzung wasserabstoßende Eigenschaften zu verleihen, wobei das Verfahren das Mischen der abbindfähigen Mauer-Zusammensetzung mit der wäßrigen Emulsion nach einem der Ansprüche 1 oder 8 umfaßt.

## Revendications

1. Composition stable au stockage comprenant une émulsion aqueuse qui comprend une phase aqueuse continue et une phase d'organosilicium discontinue ; ladite émulsion étant formulée à partir de constituants comprenant :
(A) un alcoxysilane insoluble dans l'eau de formule moyenne Rₙ-Si-R'₍₄₋ₙ₎ où n est un nombre compris entre 1 et 2, R est un radical hydrocarboné monovalent en C₅-C₂₀ et R' est un groupe alcoxy en C₁-C₄ ;
(B) un polysiloxane hydrogène-fonctionnel ayant au moins deux atomes d'hydrogène liés à du silicium par molécule, au moins cinq unités siloxy par molécule et une viscosité cinématique comprise entre 0,5 x 10⁻⁶ et 1000 x 10⁻⁶ m²/s à 25°C. ;
(C) un émulsionnant ; et
(D) de l'eau,
ladite phase d'organosilicium discontinue comprenant les constituants (A) et (B) et ladite phase aqueuse continue comprenant de l'eau ;
lesdits constituants (A) et (B) sont présents dans ladite phase d'organosilicium dans un rapport massique de 10:90 à 90:10 ; ladite émulsion reste non rompue et exhibe des caractéristiques d'exclusion d'eau, d'au moins 60 % comme déterminé par un protocole 244 National Cooperative Highway Research Program modifié réalisé sur des cubes de mortier qui ont un côté de 2 pouces (5,08 cm) après un stockage de six mois à température ambiante ou de six semaines à 50°C ; et
ladite phase d'organosilicium est présente dans ladite émulsion aqueuse dans une quantité de 10 à 75 % en poids.

2. Composition selon la revendication 1, dans laquelle ledit constituant (B) est un copolymère de diméthyl/méthylhydrogénosiloxane linéaire triméthylsiloxy terminaison-coiffé ayant trois groupes méthylhydrogénosiloxy et cinq groupes diméthylsiloxy avec une viscosité cinématique de 10 x 10⁻⁶ m²/s.

3. Composition selon la revendication 1, dans laquelle ledit constituant (B) est un méthylhydrogénosiloxane linéaire triméthylsiloxy terminaison-coiffé ayant soixante groupes méthylhydrogénosiloxy et une viscosité cinématique de 30 x 10⁻⁶ m²/s.

4. Composition selon la revendication 3, dans laquelle le rapport massique des constituants (A):(B) est de 1:3.

5. Composition selon la revendication 1, dans laquelle ledit constituant d'émulsionnant (C) présente un indice HLB de 2-20.

6. Composition selon la revendication 1, dans laquelle ledit émulsionnant est un polyoxyéthylène lauryléther.

7. Composition selon la revendication 1 comprenant en outre un acide dans une quantité suffisante pour communiquer à la composition un pH de 4-5.

8. Procédé pour la fabrication d'une composition stable au stockage comprenant une émulsion aqueuse, laquelle comprend une phase aqueuse continue et une phase d'organosilicium discontinue comprenant les étapes consistant :
(I) à combiner des constituants comprenant :
(A) un alcoxysilane insoluble dans l'eau de formule moyenne Rₙ-Si-R'₍₄₋ₙ₎ où n est un nombre compris entre 1 et 2, R est un radical hydrocarboné monovalent en C₅-C₂₀ et R' est un groupe alcoxy en C₁-C₄ ; et
(B) un polysiloxane hydrogène-fonctionnel ayant au moins deux atomes d'hydrogène liés à du silicium par molécule, au moins cinq unités siloxy par molécule et une viscosité cinématique comprise entre 0,5 x 10⁻⁶ et 1000 x 10⁻⁶ m²/s à 25°C ; et
(II) à combiner le mélange obtenu dans l'étape (I) avec :
(C) un émulsionant ; et
(D) de l'eau ; et ensuite
(III) à émulsifier la combinaison obtenue dans l'étape (II) pour former ladite émulsion dans laquelle ladite phase d'organosilicium discontinue comprend les constituants (A) et (B) et ladite phase aqueuse continue comprend le constituant (D) l'eau ;
lesdits constituants (A) et (B) sont présents dans ladite phase d'organosilicium dans un rapport massique de 10:90 à 90:10 ;
ladite émulsion reste non rompue et exhibe des caractéristiques d'exclusion d'eau d'au moins 60 %, comme déterminé par un protocole 244 National Cooperative Highway Research Program modifié réalisé sur des cubes de mortier qui ont un côté de 2 pouces (5,08 cm) après un stockage de six mois à température ambiante ou de six semaines à 50°C ; et
ladite phase d'organosilicium est présente dans ladite émulsion aqueuse dans une quantité de 10 à 75 % en poids.

9. Article de fabrication comprenant un substrat de maçonnerie, ledit substrat présentant au moins une surface qui est revêtue avec la composition stable au stockage selon l'une quelconque des revendications précédentes 1-8.

10. Procédé pour fournir à un substrat de maçonnerie un revêtement hydrophobe durci, ledit substrat présentant au moins une surface, ledit procédé comprenant le revêtement de ladite surface avec l'émulsion aqueuse soit de la revendication 1, soit de la revendication 8.

11. Procédé pour fournir à une composition de maçonnerie durcissable des propriétés hydrophobes, ledit procédé comprenant la combinaison de ladite composition de maçonnerie durcissable avec l'émulsion aqueuse soit de la revendication 1, soit de la revendication 8.
